# EUROPEAN PATENT SPECIFICATION

(11) **EP 2 588 509 B1**
(45) Date of publication and mention of the grant of the patent: **22.07.2015**
(21) Application number: 11737908.1
(22) Date of filing: 27.06.2011
(51) Int. Cl.: C08G 18/10, C08G 18/44, C08G 18/72, C08G 18/75, C08G 18/78, C09D 175/08

(54) **ALIPHATIC POLYUREA COATING, THE METHOD FOR PREPARING THE SAME AND THE USE THEREOF**
ALIPHATISCHE POLYHARNSTOFFBESCHICHTUNG, VERFAHREN ZU IHRER HERSTELLUNG UND IHRE VERWENDUNG
REVÊTEMENT DE POLYURÉE ALIPHATIQUE, SON PROCÉDÉ DE PRÉPARATION ET SON UTILISATION

(30) Priority: 29.06.2010 CN 201010213488
(43) Date of publication of application: 08.05.2013
(73) Proprietor: Bayer Intellectual Property GmbH, 40789 Monheim (DE)
(72) Inventor: ZHANG, Zhihan, Shanghai 201203 (CN); SHEN, Jianping, Shanghai 200333 (CN)
(74) Representative: BIP Patents
(86) International application number: PCT/EP2011/060733
(87) International publication number: WO 2012/000944

(56) References cited:
- WO-A1-2009/143003
- US-A- 4 463 126
- US-A- 4 581 433

## Description

### TECHNICAL FIELD

The present invention pertains to coating field, in particular, pertains to aliphatic polyurea coating, the method for preparing the same and the use thereof.

### BACKGROUND

As we know, the conventional polyurethane (polyurea) waterproofing coatings comprised single-component manual application aromatic polyurethane waterproofing coatings, two-component manual application aromatic polyurethane waterproofing coatings and two-components spraying aromatic waterproofing coatings.

By using the aromatic polyisocyanate compound (such as MDI, TDI and the adducts or oligomers thereof) as coating binder, the weatherabilities of the conventional coatings were poor. The conventional coatings were easy to be yellowing and chalking after being exposed outdoor, which would affect not only the mechanical properties, the service life of the waterproofing layer, but also the decorative performance thereof. Therefore, it was difficult for the conventional coatings to meet the requirements of being used and exposed outdoor directly. Some parts of the high speed railway bridge would be used and exposed under sun light directly, therefore the conventional polyurethane (polyurea) waterproofing coatings were limited to be applied on the high speed railway bridges, due to the fact that the conventional polyurethane (polyurea) waterproofing coatings had limited weatherability.

With the development of railway in China, especially the high speed railway, the technical requirements of the coatings applied on high speed railway bridges were higher than earlier. In 2009, it had issued a strict and detailed specification for aliphatic waterproofing coatings applied on concrete bridges in Beijing-Shanghai high speed railway, wherein, the specification required a high level of mechanical properties and weatherability. For example, the aliphatic coatings should meet the following performances as elongation ≥200 %, tensile strength ≥4 MPa, no obvious color changes, no chalking, no blisters and no cracks after 1500h artificial accelerated UV aging test, furthermore, the aliphatic coating should be applied at room temperature.

At present there were several methods to improve the weatherability and mechanical strength of aliphatic coatings. For example, CN-A 1350018 (EP-A 1 184 399) disclosed a new polyurea coating based on IPDI and HDI, however, this polyurea coating was a kind of powder coating. The curing temperature of this polyurea coating was 150-220°C, therefore, this polyurea coating was not suitable for the operation under room temperature for curing. In addition, this coating did not possess waterproof property.

In another patent, CN-A 101277988 (WO2007/039133) disclosed a coating binder comprising polyurethane prepolymer with allophanate and amine functional groups. However, the maximal elongation and the maximal tensile strength of the coating based on this binder were 61.5% and 2.4MPa respectively, which is much less than the requirements of elongation ≥200% and tensile strength ≥4MPa.

In addition, CN-A 101469246 disclosed a method for preparing waterproofing coating based on polyaspartics and polyisocyante. However, the maximal elongation of the coating prepared by this method was 150 %, less then the requirement of elongation ≥200 %.

In order to meet the practical requests of aliphatic waterproofing coatings, for example, elongation ≥200 %, tensile strength ≥4 MPa, neither obvious color changes, nor chalking, no blister, no crack after 1500h artificial accelerated UV aging test, and applicable at a room temperature, it was desirable to develop a new aliphatic polyurea coating and a coating layer based on aliphatic polyurea coating.

WO2009/143003 is disclosing a coating composition comprising 25 parts by weight of a prepolymer derived from polytetramethylene glycol and isophorone diisocyanate, 25 parts by weight of a polyisocyanate resin based on hexamethylene diisocyanate and 15 parts by weight of Jefflink^{®} 754, a sterically hindered secondary aliphatic diamine (Examples 1 and 2). However, this solution is different from the one of the present invention in that the ratio of the hexamethylene diisocyanate oligomer to the isophorone diisocyanate prepolymer is higher. The lower ratio of the hexamethylene diisocyanate oligomer to the isophorone diisocyanate prepolymer according to the present invention yields the technical effect that the elongation of the resulting coating is higher.

### CONTENTS OF INVENTION

The objective of this invention is to provide an aliphatic polyurea coating. According to one of examples in this invention, the aliphatic polyurea coating comprises a product mixed by the components including A, B and C:
A) 30-50 parts by weight of NCO-terminated polycarbonate diol modified and/or polyether polyol modified isophorone diisocyanate (IPDI) prepolymer;
B) 3-15 parts by weight of hexamethylene diisocyanate (HDI) oligomers; and
C) 10-25 parts by weight of amino resin comprising sterically hindered secondary aliphatic diamines.

Preferably, the amount of the NCO-terminated polycarbonate diol modified and/or polyether polyol modified isophorone diisocyanate prepolymer is 33 - 40 parts by weight.

Preferably, the amount of the hexamethylene diisocyanate oligomers is 4 - 6 parts by weight.

Preferably, the amount of the sterically hindered secondary aliphatic diamine is 12 - 17 parts by weight.

Another objective of this invention is to provide a method for preparing an aliphatic polyurea coating. According to one of examples in this invention, the method comprises the step of mixing the components including A, B and C:
A) 30-50 parts by weight of NCO-terminated polycarbonate diol modified and/or polyether polyol modified isophorone diisocyanate prepolymer;
B) 3-15 parts by weight of hexamethylene diisocyanate oligomers; and
C) 10-25 parts by weight of amino resin comprising sterically hindered secondary aliphatic diamines.

Preferably, the amount of the NCO-terminal polycarbonate diol modified and/or polyether polyol modified isophorone diisocyanate prepolymer (A) is 33 - 40 parts by weight.

Preferably, the amount of the hexamethylene diisocyanate oligomers (B) is 4 - 6 parts by weight.

Preferably, the amount of the amino resin comprising sterically hindered secondary aliphatic diamine (C) is 12 - 17 parts by weight.

The third objective of this invention is to provide an aliphatic polyurea coating layer. According to one of examples in this invention, the aliphatic polyurea coating layer is produced by applying the aliphatic polyurea coating presented in this invention to a substrate.

The aliphatic polyurea coating layer prepared by the aliphatic polyurea coating presented in this invention possesses good elongation and tensile strength, good flexibility in low temperature, good abrasion resistance, good adhesion property, good weatherability and good chemical resistance. The aliphatic polyurea coating presented in this invention has long potlife, therefore, it is fit for manual application. The aliphatic polyurea coating layer can be obtained by ways of spraying, rolling or brushing.

### MODE OF CARRYING OUT THE INVENTION

This invention provides an aliphatic polyurea coating comprising NCO-terminated polycarbonate diol modified and/or polyether polyol modified isophorone diisocyanate prepolymer (IPDI prepolymer), hexamethylene diisocyanate oligomers (HDI oligomers) and sterically hindered secondary aliphatic diamine.

In the present invention, the average molecular weight of the NCO-terminated polycarbonate diol modified and/or polyether polyol modified isophorone diisocyanate prepolymer (A) can be selected selected from, but not limited to, 1500 - 3500, preferably 2200 - 3000. The NCO-content of the NCO-terminated polycarbonate diol modified and/or polyether polyol modified prepolymers can be selected from, but not limited to, 2.5 - 5.0 % by weight, preferably 3.5 - 3.7 % by weight, based on 100 % by weight of the NCO-terminated polycarbonate diol modified and/or polyether polyol modified prepolymer.

The amount of the NCO-terminated polycarbonate diol modified and/or polyether polyol modified prepolymer is 30 - 50 parts by weight, preferably 33 - 40 parts.

The hexamethylene diisocyanate (HDI) oligomers can be selected from, but not limited to, hexamethylene diisocyanate trimer, hexamethylene diisocyanate biuret or hexamethylene diisocyanate uretdion, preferably hexamethylene diisocyanate biuret. The NCO-content of hexamethylene diisocyanate (HDI) oligomers can be selected from, but not limited to, 10 - 25 % by weight, preferably 15 - 23.7 % by weight, most preferably 22 % by weight, based on 100 % by weight of the hexamethylene diisocyanate (HDI) oligomers.

The amount of the hexamethylene diisocyanate oligomers is 3 - 15 parts by weight, preferably 4 - 6 parts by weight.

The amino resin comprising sterically hindered secondary aliphatic diamine can be selected from, but not limited to, secondary aliphatic diamine with alicyclic compound modified, secondary aliphatic diamine with branched alicyclic compound modified or secondary aliphatic diamine with line aliphatic compound modified, preferably secondary aliphatic diamine with alicyclic compound modified. The amino equivalent of the amino resin comprising sterically hindered secondary aliphatic diamine can be selected from, but not limited to, 200 - 400, preferably 270 - 325, most preferably 277.

The amount of the amino resin comprising sterically hindered secondary aliphatic diamine is 10 - 25 parts by weight, preferably 12 - 17 parts by weight, most preferably 15 parts by weight.

In the present invention, the components for preparing the aliphatic polyurea coating can further comprise solvents, additives, pigments or fillers.

The solvents can be selected from, but not limited to, propylene glycol methyl ether acetate, xylene, butyl acetate or of hydrocarbon mixtures. The hydrocarbon mixtures can be selected from, but not limited to, paraffin series hydrocarbon mixture and naphthene series hydrocarbon mixture.

The amount of the solvents is 5 - 55 parts by weight, preferably 45 - 55 parts by weight.

The additives can be selected from the following group consisting of dispersing agent, leveling agent, wetting agent, defoamer agent, light stabilizer, matting agent and dewater agent.

The dispersing agent can be selected from, but not limited to, solution of a high molecular weight block copolymer with pigment affinity groups.

The leveling agent can be selected from, but not limited to, polyether modified methylalkylpolysiloxane copolymer solution.

The wetting agent can be selected from, but not limited to, polyether modified dimethylpolysiloxane copolymer.

The defoamer agent can be selected from, but not limited to, solution of foam destroying polymers and polysiloxanes.

The light stabilizer agent can be selected from, but not limited to, the combination of a liquid hindered amine light stabilizer (HALS) and a liquid UV absorber of the hydroxyphenyl-benzotriazole.

The matting agent can be selected from, but not limited to fumed silica matting powder with 10 µm average particle size.

The dewater agent can be selected from, but not limited to, p-Toluenesulfonyl isocyanate.

The amount of the additives is 1 - 10 parts by weight, preferably 5 - 10 parts by weight.

The pigments can be selected from, but not limited to, rutile type titanium dioxide, high strength amorphous carbon black, iron oxides, organic pigments.

The amount of the pigments is 0 - 50 parts by weight, preferably 20 - 30 parts by weight.

The fillers can be selected from, but not limited to, inorganic fillers, such as talc powder, barium sulphate powder, etc.

The amount of extenders is 0 - 50 parts by weight.

According to the method for preparing the aliphatic polyurea coating presented in this invention, the component A and B can be mixed at first to form a crosslinking part, and then stored in sealed can. The component C can be a co-reactant part and then stored in sealed can. Before preparing the aliphatic polyurea coating layer, the crosslinking part and the co-reactant part can be mixed to obtain an aliphatic polyurea coating.

The chosen solvents or additives can be mixed with component A and B at first to form a crosslinking part and stored in sealed can. The chosen solvents, additives, pigments or fillers can be mixed with component C to form a co-reactant part and stored in sealed can. Before preparing the aliphatic polyurea coating layer, the crosslinking part and the co-reactant part can be mixed to obtain an aliphatic polyurea coating.

According to the method for preparing the aliphatic polyurea coating presented in this invention, the component A, B and C can be stored in sealed can for use respectively. Before preparing the aliphatic polyurea coating layer, the component A, B and C can be mixed to obtain an aliphatic polyurea coating.

The chosen solvents or additives can be mixed with component A or B respectively at first to form two different crosslinking parts and then stored in sealed can for use respectively. The chosen solvents, additives, pigments or fillers can be mixed with component C at first to form a co-reactant part, and then stored in sealed can for use. Before preparing the aliphatic polyurea coating layer, the two crosslinking parts can be mixed with the co-reactant part, to obtain an aliphatic polyurea coating.

The aliphatic polyurea coating layer adhered to a substrate can be obtained by a spreading process, such as spraying, rolling or brushing, of the aliphatic polyurea coating provided in the present invention onto a surface of the substrate. The spreading process can be applied at a room temperature.

The substrate can be selected from, but not limited to, polyurea waterproofing layer, aromatic polyurethane waterproofing layer, epoxy coating layer, epoxy FRP, glass panel with a smooth and flat surface, tinplate panel with a smooth and flat surface after being sanded, aluminum panel with a smooth and flat surface after being sanded, PP panel with a smooth and flat surface after being sanded, standard Q-panel aluminum panel. The polyurea waterproofing layer, can be selected from, but not limited to, pure polyurea waterproofing layer, hybrid waterproofing layer with polyurethane and polyurea.

Comparing to the coating layers made from the traditional coatings based on polyacrylic polyol, polyester polyol, polyether polyol and/or aliphatic polyisocyanate, the aliphatic polyurea coating layer provided in this invention has obvious improvement in mechanical strength, such as elongation and tensile strength.

Comparing to the traditional two-component spraying polyurea coating, the aliphatic polyurea coating provided in this invention has better manual application property. Comparing to the traditional two-component polyurea coating layer made by the traditional two-component spraying polyurea coatings, the aliphatic polyurea coating layer provided in this invention has better weatherability.

Comparing to the traditional manual application aromatic waterproofing coating; the aliphatic polyurea coating layer provided in this invention has better weatherability.

In addition, the aliphatic polyurea coating provided in this invention has short drying time, good sagging resistance and leveling properties in wet film. The aliphatic polyurea coating can be used to prepare a thick film, i.e. coating film with high film thickness, by one pass application. A thick film of the coatings according to the present invention would be a layer of e.g. >50 µm up to several millimeters, preferably between 50µm and 500µm, especially preferred between 55 µm and 150 µm. The aliphatic polyurea coating layer has high tolerant to temperature and humidity. The aliphatic polyurea coating is environmentally friendly without containing heavy metal catalyst. This aliphatic polyurea coating, which can be used as a topcoat of the polyurea waterproofing coating layers or aromatic polyurethane waterproofing coating layers, is suitable to be applied outdoor, especially applied as an exposed waterproofing layer on a concrete bridge of a high speed railway or on a roof. Furthermore, the aliphatic polyurea coating provided in the present invention can be applied as a topcoat on a windmill blade, due to the fact that the aliphatic polyurea coating possesses good abrasion resistance and good weatherability.

### EXAMPLES

The present invention is illustrated through the following Examples, and these Examples are only used to illustrate the present invention, rather than limit the scope of the present invention in any way.

**The materials mentioned in this context are illustrated as follows**
- Desmodur^{®} XP 2406: NCO-terminated polycarbonate modified isophorone diisocyanate (IPDI) prepolymer, the NCO-content is approximately 2.8 % by weight, (based on supply form, i.e. 80 % by weight solid content in methoxypropyl acetate), the viscosity is approximately 7000 mPa·s at 23° C, the flashing point is approximately 54° C, the density is approximately 1.08 g/cm³ at 20° C. Available from Bayer Materialscience (China) Co., Ltd.
- Desmodur^{®} VP LS 2371: NCO-terminated polyether modified isophorone diisocyanate (IPDI) per-polymer, the solid content is 100% by weight, the NCO-content is approximately 3.7 % by weight, (based on supply form), the viscosity is approximately 11000 mPa·s at 23° C, the flashing point >250° C, the density is approximately 1.04 g/cm³ at 20° C. Available from Bayer Materialscience (China) Co., Ltd.
- Desmodur^{®} N75 BA: Biuret of hexamethylene diisocyanate (HDI), the solid content is 75 wt.%, the NCO-content is approximately 16.5 ± 0.3wt.%, (based on supply form, i.e. 75 % by weight solid content in n-butyl acetate), the viscosity is approximately 160 ± 50 mPa·s at 23° C, the flashing point is approximately 35° C, the density is approximately 1.07 g/cm³ at 20° C. Available from Bayer Materialscience (China) Co., Ltd.
- Desmophen^{®} NH 1420: Aliphatic secondary diamine with cycloaliphatic modified, the amino equivalent is approximately 277 (based on supply form), the viscosity is approximately 900 - 2000 mPa·s at 25° C, the flashing point is approximately 145° C, the density is approximately 1.076 g/cm³ at 20° C. Available from Bayer MaterialScience (China) Co., Ltd.
- Disperbyk^{®} 115: Solution of high molecular weight block copolymer with pigment affinity groups, the amino equivalent is approximately 25 mgKOH/g, the density is approximately 0.96 g/ml at 20° C, the nonvolatile component is approximately 52%, the flashing point >24° C, the ratio of xylene to butyl acetate to methoxypropylacetate in solvent is 5:1:1. Available from BYK-Chemie Co., Ltd.
- Ti-pure R-706: Chloride prepared rutile titanium dioxide pigment, the TiO₂ content is higher than or equal to 93 wt.%, the average particle size is approximately 0.36µm, the oil absorption is approximately 13.9 g/100g, the pH value is approximately 8.2. Available from Dupont Co., Ltd.
- FW200: High color amorphous carbon black, the basic particle size is approximately 13 nm, the specific surface is approximately 550 m²/g. Available from Evonik Degussa Co., Ltd.
- BYK^{®} 320: Polyether modified methylalkylpolysiloxane copolymer, the density is approximately 0.86 g/ml at 20° C, the nonvolatile component is approximately 52 %, the flashing point is approximately 38° C, the solvent is gasoline/methoxypropylacetate(9/1). Available from BYK-Chemie Co., Ltd.
- BYK^{®} 333: Polyether modified dimethylpolysiloxane copolymer, the density is approximately 1.04g/ml at 20° C, the nonvolatile component ≥97%, the flashing point>100° C. Available from BYK-Chemie Co., Ltd.
- BYK^{®} A 530: Solution of foam destroying polymers and polysiloxanes, the density is approximately 0.81 g/ml at 20° C, the nonvolatile component is approximately 5 % by weight, the flashing point >95° C, the solvent is a mixture of hydrocarbon (paraffin series, naphthene series). Available from BYK-Chemie Co., Ltd.
- Tinuvin^{®} 292: Bis (1,2,2,6,6-pentamethyl-4-piperidyl) sebacate and methyl 1,2,2,6,6-pentamethyl-4-piperidyl sebacate ester, dynamic viscosity is approximately 400mPa·s at 20° C. Available from Ciba Co., Ltd.
- Tinuvin^{®} 1130: Mixture of benzontriazole, the dynamic viscosity is approximately 7400 mPa·s at 20° C. Available from Ciba Co., Ltd.
- Acematt^{®} TS 100: Gas phase silicon dioxide matting, the SiO₂ content is higher than 99.8 wt.%, the average particle size is approximately 10µm, the oil absorption is approximately 360 g/100 g, the pH value is approximately 6.5. Available from Evonik Degussa Co., Ltd.
- Addtive TI: Methyl benzene sulfonyl isocyanate, the active ingredient ≥97 % b.w., viscosity is 10 mPa·s, the relative density is 1.29, the boiling point is 270° C, the freezing point is 5° C, the flashing point >100° C. Available from Borchers Co., Ltd.
- MPA: Solvent: methoxypropylacetate. Available from Dow Co.,Ltd.
- Xylene: Solvent: xylene. Available from Shanghai experiment reagent Co., Ltd.
- BA: Solvent: butyl acetate. Available from Shanghai experiment reagent Co.,Ltd.
- Desmophen^{®} A 575 X: Highly flexible hydroxyl polyacrylate, the OH content is approximately 2.8 ± 0.2wt. % (based on supply form, i.e. 75 % by weight solids in xylene), the viscosity is approximately 3500 ± 500 mPa·s at 23° C, the flashing point is approximately 23° C, the density is approximately 1.06 g/cm³ at 20° C. Available from Bayer MaterialScience (China) Co., Ltd.
- Desmophen^{®} 670 BA: Highly flexible slightly branched hydroxyl polyester, the OH content is approximately 3.5 ± 0.3wt.% (based on supply form, i.e. 80 % by weight solids in butyl acetate), the viscosity is approximately 3000 ± 400 mPa·s at 23° C, the flashing point is approximately 32° C, the density is approximately 1.11 g/cm³ at 20° C. Available from Bayer MaterialScience (China) Co., Ltd.
- Desmophen^{®} 1652: Highly flexible linear hydroxyl polyester, the OH content is approximately 1.6 ± 0.2wt.%, the viscosity is approximately 11000 ± 2000 mPa·s at 23° C, the flashing point is approximately 218° C, the density is approximately 1.17g/cm³ at 20° C. Available from Bayer MaterialScience (China) Co., Ltd.
- Desmophen^{®}. 5028 GT: Highly flexible three-functional polypropylene ether polyol, comprising 20 % (by weight)polyurethane polyurea as filler, the OH content is approximately 0.86 ± 0.06 wt.%, the viscosity is approximately 3600 ± 400 mPa·s at 25° C, the density is approximately 1.08g/cm³ at 20° C. Available from Bayer MaterialScience (China) Co., Ltd.
- DBTDL: Dibutyltin dilaurate, the molecular weight is 631, the tin content is 18.5 ± 5 wt.%. Available from Air Products.

All viscosity data were determined according to DIN EN ISO 3219/A.3.

The NCO-contents were determined according to DIN EN ISO 11 909.

### Selection and Pretreatment of the Substrates

Different substrates might be used in the test items of coating provided in the present invention. The selection and pretreatment of the substrates are listed in Table 1 as well as the test items.

**Table 1: Selection and Pretreatment of the Substrates**

| **Selection of the substrate** | **Pretreatment of the substrate** | **The test items for the coating** |
|---|---|---|
| Using polyurea waterproofing coating with a thickness of 1.8 ± 0.2 mm as a substrate, the substrate can be prepared easily, i.e. spraying a polyurea waterproofing coating with a thickness of 1.8 ± 0.2 mm, and peeling it off | Before spraying the paint, wiping the surface of the polyurea waterproofing coating with a clean paper dipped in acetone | Test for adhesion, chemical resistance, water resistance, and flexibility under low temperature |
| Using glass panel with a smooth, flat, clean surface | Before spraying the paint, wiping the surface of the glass panel with a clean paper dipped in acetone | Test for drying time |
| Using sanded tin panel with a smooth, flat, clean surface | Before spraying the paint, using a 300 mesh sand paper to sand the surface of the tin panel, and wiping it with a clean paper dipped in acetone | Test for flexibility and impact resistance |
| Using sanded aluminum panel with smooth, flat, clean surface | Before spraying the paint, using a 300 mesh sand paper to sand the surface of the aluminum panel, and wiping it with a clean paper dipped in acetone | Test for abrasion resistance |
| Using PP panel with a smooth, flat, clean surface | Before spraying paint, wiping the PP panel with a clean paper dipped in acetone | Test for elongation and tensile strength |
| Using standard Q-panel aluminum panel | Before spraying paint, wiping the Q-panel aluminum panel with a clean paper dipped in acetone | Test for artificial accelerated weathering resistance |

### Method for Preparing the Coating film for testing

The coating film for testing can be applied, but not limited by, air spraying. According to the practical requirements, the thickness of the dry film is 200 ± 10 µm The coating film is spayed to form a dry film in one pass, if the thickness of dry film reaches 200 µm in one pass. The coating film is spayed to form a dry film in several passes until the thickness of dry film reaches 200 ± 10 µm, if the thickness of dry film can not reach 200 µm in one pass.

### Illustration of Test Items for Examples and Comparative Examples

Elongation is not only one of the most important property for the quality of aliphatic polyurea coating, but also one of the most difficult property to be achieved.

In the Examples and Comparative Examples of the present invention, seven properties of aliphatic polyurea coating, such as elongation, tensile strength, drying time, adhesion, alkali resistance (NaOH 5% 240h), acid resistance (H₂SO₄ 5% 240h) and artificial accelerated weathering resistance, are used to test and compare.

### Test Specification of Examples and Comparative Examples

The test items and specification of the Examples and Comparative Examples are listed in Table 2.

**Table 2: Test Items and Specification of the Samples**

| **Serial Number** | **Test Items** | | **Specification** | **Test Method** |
|---|---|---|---|---|
| 1 | Color and appearance of coating film | | Light grey, Satin, even colour | Observation |
| 2 | Solid content % | | ≥60 | GB/ T 1725 |
| 3 | Fineness µm | | ≤50 | GB/ T 6753.1 |
| 4 | Drying time | Surface drying | ≤4 | GB/ T 1728 |
| | | Hard drying | ≤24 | GB/ T 1728 |
| 5 | Bending, Φ10mm | | ≤ -30° C, no cracking, no peeling | GB/ T 6742 |
| 6 | Impact resistance, 100cm | | No cracking, no wrinkling and no flaking | GB/ T 1732 |
| 7 | Adhesion (pull off method) MPa | | ≥2.5 | GB/ T 5210 |
| 8 | Alkali resistance NaOH 5 % 240h | | 240h, no blistering, no wrinkling, no discoloration, no peeling and other phenomena | GB/T9274 |
| 9 | Acid resistance H₂SO₄ 5 % 240h | | | |
| 10 | Salt resistance NaCl 3 % 240h | | | |
| 11 | Oil resistance, machine oil 240h | | | |
| 12 | Water resistance 48h | | No blistering, no wrinkling, no apparent discoloration and no peeling | GB/ T 1733 |
| 13 | Artificial accelerated weathering resistance | | No apparent discoloration, no chalking, no blistering and no cracking after 1500h | GB/ T 14522 |
| 14 | Tensile strength MPa | | ≥4.0 | GB/ T 16777 GB/ T 16777 |
| 15 | Elongation % | | ≥200 | |
| 16 | Abrasion resistance (750g/500r)mg | | ≤40 | GB/ T 1768 |

| | | | | |
|---|---|---|---|---|
| Note: GB is the Chinese National Standard. | | | | |

### Illustration of Raw Material Selected for the Comparative Examples

Highly flexible polyacrylate polyol: Desmophen^{®} A 575 X;
Highly flexible polyester polyol with slightly side chain: Desmophen^{®} 670 BA, Desmophen^{®} 1652;
Highly flexible polypropylene ether polyol with three-functional: Desmophen^{®} 5028 GT;
HDI biuret: Desmodur^{®} N75 BA;
To optimize the formulation, two or more resins are blended for using. For example, blending Desmophen^{®} A 575 X and Desmophen^{®} 1652, or blending Desmophen^{®} 5028 GT and Desmophen^{®} 670 BA.

### Comparative Example C1

### Preparation of mixed solvent

Weigh out MPA, xylene and butyl acetate with the mixing ratio of 1:1:1, put them into a dissolver for 10 minutes stirring at a speed of 500 rpm, fill the mixture in a sealed container.

### Preparation of color paste

By using a dispersing plate, put 220 g Desmophen^{®} A575 BA into a dissolver with a cooling water jacket, and then turn on the cooling water;

Add 50g mixed solvent, 527 g Ti-pure^{®} R-706, and 3g FW 200 under stirring at a low speed (approximately 800 rpm), then wash the pigment powder stuck on the wall and axes of dissolver by 32.5 g mixed solvent;

Increase the dispersing speed to 3000 rpm and disperse for 15 minutes;

Replace the dispersing plate to a grinding plate, add 150g mixed solvent and approximately 1000g grinding beads slowly at low speed (approximately 800 rpm). Increase the dispersing speed to 3000 rpm & keep grinding for 45 minutes. Check fineness, if fine-ness≤20µm, stop the grinding process and turn off the cooling water, the color paste preparation is completed; if fineness > 20µm, continue grinding until the fineness ≤20 µm;

Filter the color paste with 100-200 mesh sieve. The finished color paste should be stored in a sealed container.

### Preparation of component A

Put 270g Desmophen^{®} A 575 BA into a dissolver, add 450g prepared color paste, 150g Desmophen^{®} 1652, 2g BYK^{®} 320, 2g BYK^{®} 333, 2g BYK^{®} A530, 6g Tinuvin^{®} 292, 1g DBTDL (20% b.w. xylene solution), 60g mixed solvent and 50g TS100 slowly at a low speed (approximately 1000 - 1200 rpm), then wash the matting agent stuck on the wall and axes of dissolver container by 8g mixed solvent. Increase the dispersing speed to 2000 rpm and disperse for 15-20 minutes. Check fineness, if fineness ≤45 µm, stop dispersing; If fineness >45 µm, continue dispersing until the fineness ≤45 µm;

Filter component A with 100-200 mesh sieve, component A should be stored in a sealed container. The prepared component A can be used after 24 hours storage.

### Preparation of component B

Component B is Desmodur^{®} N 75 BA, no additional processing.

### Application and test specimen preparation

Weigh out component A and component B accurately according to the mixing ratio of 4:1, then manually mixing for 1-3 min. Add an appropriate amount of mixed solvent to adjust the viscosity until flow time of Tu-4 cup is 20 ± 2s, and the mixture can be used after filtration by 200 mesh sieve. Prepare a test specimen on the corresponding substrate by air spraying, spray 2-3 passes until the dry film thickness reaches 200 ± 10µm.

Make comparison between the Comparative Example C1 and the Examples, the comparing items & results are listed in Table 3.

### Comparative Example C2

### Preparation of mixed solvent

Weigh out MPA, xylene and butyl acetate with the mixing ratio of 1:1:1, put them into a dissolver for 10 minutes stirring at a speed of 500 rpm, fill the mixture in a sealed container.

### Preparation of color paste

Put 220 g Desmophen^{®} 670 BA into a dissolver with a cooling water jacket, and turn on the cooling water;

Add 160 g mixed solvent, 20g Disperbyk^{®} 115, 567g Ti-pure^{®} R-706, 3g FW 200 under stiring at a low speed (approximately 800 rpm), then wash the pigment powder stuck on the wall and axes of dissolver by 30g mixed solvent.

Increase the dispersing speed to 3000 rpm and disperse for 15 minutes;

Replace the dispersing plate to a grinding plate, add 150g mixed solvent and approximately 1000g grinding beads slowly at a low speed (approximately 800 rpm). Increase the dispersing speed to 3000 rpm & keep granding for 45 minutes. Check fineness, if fineness ≤20µm, stop the grinding process and turn off the colling water, the color paster preparation is completed; if fineness >20 µm, continue grinding until the fineness ≤20 µm;

Filter the color paster with 100-200 mesh sieve. The finished color paste should be stored in a sealed container.

### Preparation of component A

Put 480g Desmophen^{®} 670 BA into a dissolver, add 295g prepared color paste, 2g BYK^{®} 320,2g BYK^{®} 333, 2g BYK^{®} A530, 5g Tinuvin^{®} 292, 6g DBTDL (20 % b.w. xylene solution), 132g mixed solvent and 55g TS100 slowly at a low speed (approximately 1000 - 1200 rpm), then wash the matting agent stuck on the wall and axes of dissolver container by 20g mixed solvent. Increase the dispersing speed to 2000 rpm and disperse for 15 - 20 minutes. Check fineness, if fineness ≤45µm, stopping dispersing; if fineness >45µm, continue dispersing until fineness ≤ 45µm;

Filter the component A with 100 - 200 mesh sieve, component A should be stored in a sealed container. The prepared component A can be used after 24 hours storage.

### Preparation of component B

Component B is Desmodur^{®} N 75 BA, no additional processing.

### Application and test specimen preparation

Weigh out component A and component B accurately according to the mixing ratio of 10:3, then manually mixing for 1 - 3 min. Add an appropriate amount of mixed solvent to adjust the viscosity until flow time of the Tu-4 cup is 20 ± 2s, and the mixture can be used after filtration by 200 mesh sieve. Prepare a test specimen on the corresponding substrate by air spraying, spray 2 - 3 passes until the dry film thickness reaches 200 ± 10µm.

Make a comparison between the Comparative Example C2 and the Examples, the comparing items & the results are listed in Table 3.

### Comparative Example C3

### Preparation of mixed solvent

Weigh out MPA, xylene and butyl acetate with the mixing ratio of 1:1:1, put them into a dissolver for 10 minutes stirring at a speed of 500 rpm, fill the mixture in a sealed container.

### Preparation of color paste

Put 220g Desmophen^{®} 670 BA into a dissolver with a cooling water jacket and turn on the cooling water;

Add 160g mixed solvent, 20g Disperbyk^{®} 115, 567g Ti-pure^{®} R-706, 3 g FW under stirring at a low speed (approximately 800 rpm), then wash the pigment powder stuck on the wall and axes of dissolver by 30 g mixed solvent. Increase the dispersing speed to 3000 rpm and disperse for 15 minutes;

Replace the dispersing plate to a grinding plate, add approximately 1000g grinding beads slowly at a low speed (approximately 800 rpm). Increase the dispersing speed to 3000 rpm & keep grinding for 45 minutes. Check fineness, if fineness ≤20 µm, stop the grinding process and turn off the cooling water, the color paste preparation is completed; if fineness >20µm, continue grinding until fineness ≤20 µm;

Filter the color paste with 100-200 mesh sieve. The finished color paste should be stored in a sealed container.

### Preparation of component A

Put 480g Desmophen^{®} 670 BA into a dissolver, add 300g prepared color paste, 400g Desmophen^{®} 5028 GT, 6g BYK^{®} 320, 4g BYK^{®} 333, 4g BYK^{®} A530, 7g Tinuvin^{®} 292, 15g Tinuvin^{®} 1130, 6g DBTDL (20 % xylene solution), 138g mixed solvent and 60g TS100 slowly at a low speed (approximately 1000 - 1200 rpm), then wash the matting agent stuck on the wall and axes of dissolver container by 20g mixed solvent. Increase the dispersing speed to 2000 rpm and dispersing for 15 - 20 minutes. Check fineness, if fineness ≤45 µm, stop dispersing; if the fineness >45 µm, continue dispersing until fineness ≤45 µm;

Filter the component A with 100 - 200 mesh sieve, component A should be stored in a sealed containers. The prepared component A can be used after 24 hours storage.

### Preparation of component B

Component B is Desmodur^{®} N 75 BA, no additional processing.

### Application and test specimen preparation

Weigh out component A and component B accurately according to the mixing ratio of 144:36, then manually mixing for 1 - 3 min. Add an appropriate amount of mixed solvent to adjust the viscosity until flow time of the Tu-4 cup is 20 ± 2s, and the mixture can be used after filtration by 200 mesh sieve. Prepare a test specimen on the corresponding substrate by air spraying, spray 2 - 3 passes until the dry film thickness reaches 200 ± 10 µm.

Make comparison between the Comparative Example C3 and the Examples, the comparing items & results are listed in Table 3.

### Example E1

### Preparation of mixed solvent

Weigh out MPA, xylene and butyl acetate with the mixing ratio of 1:1:1, put them into a dissolver for 10 minutes stirring at a speed of 500 rpm, fill the mixture in a sealed container.

### Preparation of component A

Put 105.3g Desmophen^{®} NH 1420 into a dissolver with a cooling water jacket and then turn on the cooling water;

Add 7g Disperbyk^{®} 115, 180g Ti-pure^{®} R-706, 2.5g FW 200 under stirring at low speed (approximately 800 rpm), then wash the pigment powder stuck on the wall and axes of dissolver container by 15g mixed solvent.

Increase the dispersing speed to 3000 rpm and disperse for 15 minutes;

Replace the dispersing plate to a grinding plate, add 15g mixed solvent and approximately 320 g grinding beads slowly at a low speed (approximately 800 rpm). Increase the dispersing speed to 3000 rpm & keep grinding for 45 minutes, Check fineness. If fineness ≤20 µm, stop the grinding process and turn off the cooling water, continue to the next process, if fineness >20 µm, continue grinding until fineness ≤20µm;

Replace the grinding plate to a dispersing plate, add 3g BYK^{®} 320, 2g BYK^{®} 333, 2g BYK^{®} A530, 5g Tinuvin^{®} 292, 10g Tinuvin^{®} 1130, 118.2g mixed solvent and 25g TS100 into dissolver slowly at a low speed (approximately 1000-1200 rpm), then wash the matting agent stuck on the wall and axes of dissolver by 10g mixed solvent. Disperse for 15 min. Check fineness, if fineness ≤45µm, stop dispersing, turn off the cooling water; if the fineness >45µm, continue dispersing until fineness ≤45µm;

Filter the component A with 100-200 mesh sieve, component A should be stored in a sealed containers. The prepared component A can be used after 24 hours storage.

### Preparation of component B

Put 342.6g Desmodur^{®} XP 2406 into a dissolver, add 42.8g Desmodur^{®} N 75 BA, 113.6 g butyl acetate and 1g Additive TI under stirring at a low speed (approximately 800-1000 rpm), stir for 10 min, the component B preparation is completed. Component B should be stored in sealed container properly.

### Application and test specimen preparation

Weigh out component A and component B accurately according to the mixing ratio of 1:1, then manually mixing for 1 - 3 minutes. Add an appropriate amount of mixed solvent to adjust the viscosity until flow time of the Tu-4 cup is 20 ± 2s, and the mixture can be used after filtration by 200 mesh sieve. Prepare a test specimen on the corresponding substrate by air spraying, dry film thickness can reach 200 ± 10µm by spraying one pass.

Make comparison between the Example E1 and Comparative Examples, the comparing items & the results are listed in Table 3.

The complete test items and results of Example E1 are listed in Table 4.

### Example E2

### Preparation of mixed solvent

Weigh out MPA, xylene and butyl acetate with the mixing ratio of 1:1:1, put them into a dissolver for 10 minutes stirring at a speed of 500 rpmremove, fill the mixture in a sealed container.

### Preparation of component A

Put 108 g Desmophen^{®} NH 1420 into a dissolver with a cooling water jacket and then turn on the cooling water;

Add 7 g Disperbyk^{®} 115, 187 g Ti-pure^{®} R-706 and 2.2g FW 200 under stirring at low speed (approximately 800 rpm), then wash the pigment powder stuck on the wall and axes of dissolver by 17.3 g mixed solvent.

### Increase the dispersing speed to 3000 rpm and disperse for 15 minutes;

Replace the grinding plate to a dispersing plate, add 10 g mixed solvent and approximately 330 g grinding beads slowly by at a low speed (approximately 800 rpm), increase the dispersing speed to 3000 rpm & keep grinding for 45 minutes. Check fineness, if fineness ≤20 µm, stop the grinding process, turn off the cooling water and start the next process; if fineness >20 µm, continue grinding until fineness ≤ 20 µm;

Replace the grinding plate to a dispersing plate, adding 3 g BYK^{®} 320, 2 g BYK^{®} 333, 2 g BYK^{®} A530, 5 g Tinuvin^{®} 292, 10 g Tinuvin^{®} 1130, 113.5 g mixed solvent and 25g TS100 into dissolver container slowly at a low speed (approximately 1000 - 1200 rpm), then wash the matting agent stuck on the wall and axes of dissolver by 8 g mixed solvent. Disperse for 15 minutes. Check fineness, if fineness ≤ 45 µm, stop dispersing, turn off the cooling water; if fineness >45 µm, continue dispersing until fineness ≤ 45 µm.

Filter the component A with 100-200 mesh sieve, component A should be stored in a sealed containers. The prepared component A can be used after 24 hours storage.

### Preparation of component B

Put 240g Desmodur^{®} VP LS 2371 into a dissolver, add 48g Desmodur^{®} N 75 BA, 211g butyl acetate and 1g Additive TI slowly under stirring at a low speed (approximately 800-1000 rpm), stir for 10 min, component B preparation is completed. Component B should be stored in sealed container properly.

### Application and test specimen preparation

Weigh out component A and component B accurately according to the mixing ratio of 1:1, then manually mixing for 1 - 3 min. Add an appropriate amount of mixed solvent to adjust the viscosity until flow time of the Tu-4 cup is 20 ± 2s, and the mixture can be used after filtration by 200 mesh sieve. Prepare a test specimen on the corresponding substrate by air spraying, dry film thickness can reach 200 ± 10µm by spraying one pass.

Make comparison between the Example E2 and Comparative Examples, the comparing items and results are listed in Table 3.

The complete test items and results of Example E2 are listed in Table 4.

**Table 3: Comparison items and results of Example E1, E2 and Comparative Example C1, C2, C3**

| **Serial Number** | **Test Items** | | **Example E1** | **Example E2** | **Comparative Example C1** | **Comparative Example C2** | **Comparative Example C3** |
|---|---|---|---|---|---|---|---|
| 1 | Drying time | Surface drying h | ∼2.5 | ∼1.5 | ∼2.5 | ∼4 | ∼4 |
| | | Hard drying h | ∼12 | ∼5 | ∼13 | ∼18 | ∼18 |
| 2 | elongation % | | ∼480 | ∼360 | ∼106 | ∼130 | ∼210 |
| 3 | Tensile strength MPa | | ∼15 | ∼16 | ∼13.5 | ∼6 | ∼3.5 |
| 4 | Adhesion (pull method) MPa | | ≥8 | ≥10 | ∼5 | ∼5 | ∼1 |
| 5 | Alkali resistance NaOH 5% 240h | | ≥240h | ≥480h | ≤240 | ≤240 | ≤240 |
| 6 | Acid resistance H₂SO₄ 5% 240h | | ≥240h | ≥480h | ≤240 | ≤240 | ≤240 |
| 7 | Artificial accelerated weathering resistance test | | ≥2000h | ≥1500h | ≥1500h | ≥1500h | ≤100 |

| | | | | | | | |
|---|---|---|---|---|---|---|---|
| Note: the corresponding coating of the above Examples and Comparative Examples are listed below: Example E1: NCO-terminal polycarbonate modified IPDI prepolymer (Desmodur^{®} XP 2406), secondary aliphatic diamine with alicyclic compound modified (Desmophen^{®} NH1420). Example E2: NCO-terminal polyether modified IPDI prepolymer (Desmodur^{®} VP LS 2371), secondary aliphatic diamine with alicyclic compound modified (Desnophen^{®} NH 1420). Comparative Example C1: Highly flexible hydroxyl polyacrylate (Desmophen^{®} A575 X), Highly flexible linear hydroxyl polyester (Desmophen^{®} 1652), HDI Biuret (Desmodur^{®} N75). Comparative Example C2: Highly flexible slightly branched hydroxyl polyester (Desmophen^{®} 670 BA), HDI Biuret (Desmodur^{®} N75). Comparative Example C3: Highly flexible three-functional polypropylene hydroxyl polyether (Desmophen^{®} 5028 GT), Highly flexible slightly branched hydroxyl polyester (Desmophen^{®} 670 BA), HDI Biuret (Desmodur^{®} N75). | | | | | | | |

Table 3 shows that, Comparative Example C1, C2 based on hydroxyl acrylate and hydroxyl polyester, the elongation can not reach 200 %, the acid and alkali resistance is poor; Comparative Example C3 based on hydroxyl polyether can reach 200% elongation, but the tensile strength is <4 MPa, the adhesion and UV resistance are also poor; furthermore, the formulations of C1,C2,C3 require a large amount of organic tin catalysts for curing at room temperature, however, organic tin may cause pollution to environment. By comparing, Example E1 and E2 showed better properties than Comparative examples, especially the properties of elongation and UV resistance. In addition, the formulations of Example E1 and E2 are environmentally friendly, due to no heavy metal catalyst in Example E1 and E2.

**Table 4: Complete test results of Examples E1, E2**

| **Serial Number** | **Test Items** | | **Example E1** | **Example E2** | **Specification (Reference Ministry of Railway Technology specification 2009-54 File)** |
|---|---|---|---|---|---|
| 1 | Color and appearance of coating film | | light grey, satin, even color | light grey, satin, even color | light grey, satin, even color |
| 2 | Non-volatile content % | | ∼ 61 | ∼ 62 | >60 |
| 3 | Fineness µm | | ≤45 | ≤45 | ≤50 |
| 4 | Drying time | Surface drying h | ∼2.5 | ∼1.5 | ≤4 |
| | | Hard drying h | ∼12 | ∼5 | ≤24 |
| 5 | Flexural properties Φ10mm bending | | ≤-30° C, no cracking, no peeling | ≤-30° C, no cracking, no peeling | ≤-30° C, no cracking, no peeling |
| 6 | Impact resistance, drop height 100cm | | No cracks, no wrinkles, no flaking | No cracks, no wrinkles, no flaking | No cracks, no wrinkles, no flaking |
| 7 | Adhesion (pull method)MPa | | ≥8 | ≥10 | ≥2.5 |
| 8 | Alkali resistance NaOH 5 % 240h | | ≥240h | ≥480h | 240h, the coat has no blistering, no wrinkling, no discoloration, nopeeling, no other phenomena |
| 9 | Acid resistance H₂SO₄ 5 % 240h | | ≥240h | ≥480h | |
| 10 | Salt resistance NaCl 10 % 240h | | ≥240h | ≥480h | |
| 11 | Oil resistance machine oil 240h | | ≥240h | ≥480h | |
| 12 | Water resistance 48h | | No blistering, no wrinkling, no discoloration, no peeling | No blistering, no wrinkling, no discoloration, no peeling | no blistering, no wrinkling, no discoloration, no peeling |
| 13 | Artificial accelerated weathering resistance test | | ≥1500h (see Table 5) | ≥1500h (see Table 5) | no apparent discoloration and chalking, no bilstering, no cracking after 1500h |
| 14 | Tensile strength (MPa) | | ∼15 | ∼16 | ≥4.0 |
| 15 | Elongation % | | ~480 | ∼360 | ≥200 |
| 16 | Abrasion resistance (750g/500r)mg | | ≤10 | ≤25 | ≤40 |

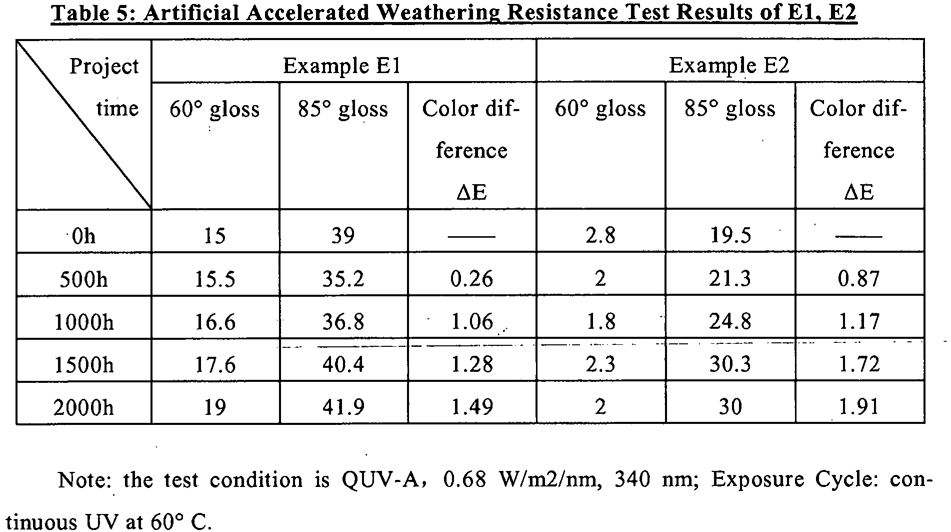

Table 4 and Table 5 show that, the aliphatic polyurea coating layer applied from Example E1 and E2 can achieve: elongation ≥200 %, tensile strength ≥4 MPa, no apparent discoloration and chalking, no blistering and no cracking after 1500h artificial accelerated aging test.

In order to enhance the guidance of the present invention in practical application, we adjust the ratio of the IPDI prepolymer in the formulation based on Example E1 and evaluate its influence on the working time (pot life), drying time, elongation and tensile strength. Detailed results listed in Table 6.

**Table 6: Influence of Different Ratio of IPDI Prepolymer on the working Time, Drying time, Elongation and Tensile Strength**

| Test Items | | Pure N75 | XP 2406 : N75 = 5 : 1 | XP 2406 : N75 = 8 : 1 | XP 2406 : N75 = 10 : 1 | XP 2406 : N75 = 15 : 1 | Pure XP 2406 |
|---|---|---|---|---|---|---|---|
| Working time, h | | 0.33 | 1.5 | 2.5 | 2.67 | 3 | 3.33 |
| Drying time | Surface drying, h | 0.42 | 0.83 | 2 | 3 | 3.67 | 18.33 |
| | Hard drying, h | 0.83 | 3 | 12 | 15 | 20 | 25.83 |
| Elongation % | | 6 | 290 | 450 | 500 | 630 | 1100 |
| Tensile strength, MPa | | 35 | 17.8 | 15.2 | 12.1 | 8 | 6 |

Table 6 shows that, changing the ratio of Desmodur^{®} XP 2406 and Desmodur^{®} N 75 enables adjustments below: working time of the aliphatic polyurea coating in the range of 0.33h to 3.33h, surface drying time of the aliphatic polyurea coating in the range of 0.42h to 18.33h, elongation of the aliphatic polyurea coating in the wide range of near 0 % to more than 1000 %, tensile strength of the aliphatic polyurea coating in the range of 6 MPa to 35 MPa.

Furthermore, based on Example E1, the present invention tests the influence of temperatures on the application of the coating. Detailed results listed in Table 7.

**Table 7: Influence of temperatures on the working time and drying time of Example E1**

| Test Items | | Application temperature 5° C | 23° C | 45° C |
|---|---|---|---|---|
| Working time, h | | 3 | 2.5 | 2.5 |
| Drying time | Surface drying time, h | 1.9 | 2 | 2 |
| | Hard drying time, h | 15 | 12 | 12 |

Table 7 shows that, the aliphatic polyurea coating provided in the present invention has high tolerance to different temperatures. The working time and drying time of the coating is close under both low temperature condition of 5° C and high temperature condition of 45° C. It reveals that the aliphatic polyurea coating provided in this invention has excellent application properties.

To sum up, the present invention selects NCO-terminated polycarbonate diol modified and/or polyether polyol modified isophorone diisocyanate prepolymer, HDI biuret and the sterically hindered secondary aliphatic diamines as the basis of coating, and obtains an aliphatic polyurea coating with excellent properties. Comparing to those coatings based on hydroxyl acrylic, hydroxyl polyester, hydroxyl polyether with aliphatic polyisocyanates, the coating provided in this invention makes obvious improvements in elongation, tensile strength, chemical resistance, weather resistance, adhesion and application etc.. In addition, it is easy to adjust the application properties or the physical and chemical properties of the aliphatic polyurea coating by adjusting the formulation of the coating (for example, adjusting the ratio of Desmodur^{®} XP 2406 to Desmodur^{®} N 75 BA).

Although the present invention is illustrated through Examples, it is not limited by these Examples in any way. Without departing from the spirit and scope of this invention, those skilled in the art can make any modifications and alternatives. And the protection of this invention is based on the scope defined by the claims of this application.

## Claims

1. An aliphatic polyurea coating, comprising a product mixed by the components including A, B and C:
A) 30 - 50 parts by weight of NCO-terminated polycarbonate diol modified and/or polyether polyol modified isophorone diisocyanate (IPDI) prepolymer;
B) 3 - 15 parts by weight of hexamethylene diisocyanate (HDI) oligomers; and
C) 10 - 25 parts by weight of amino resin comprising sterically hindered secondary aliphatic diamines.

2. The aliphatic polyurea coating as claimed in Claim 1, wherein the amount of the NCO-terminated polycarbonate diol modified and/or polyether polyol modified isophorone diisocyanate prepolymer is 33 - 40 parts by weight.

3. The aliphatic polyurea coating as claimed in Claim 1 or 2, wherein the average molecular weight of the NCO-terminated polycarbonate diol modified and/or polyether polyol modified isophorone diisocyanate (IPDI) prepolymer is 1500 - 3500, the NCO-content is 2.5 - 5.0 % by weight, based on 100 % by weight of the NCO-terminated polycarbonate diol modified and/or polyether polyol modified isophorone diisocyanate (IPDI) prepolymer.

4. The aliphatic polyurea coating as claimed in Claim 1, wherein the amount of the hexamethylene diisocyanate(HDI) oligomers is 4 - 6 parts by weight.

5. The aliphatic polyurea coating as claimed in Claim 1, wherein the hexamethylene diisocyanate (HDI) oligomers is selected from the group consisting of hexamethylene diisocyanate trimer, hexamethylene diisocyanate biuret and hexamethylene diisocyanate uretdion.

6. The aliphatic polyurea coating as claimed in Claim 1, 4 or 5, wherein the NCO-content of the hexamethylene diisocyanate (HDI) oligomers is 10 - 25 % by weight, based on 100 % by weight of the hexamethylene diisocyanate (HDI) oligomers.

7. The aliphatic polyurea coating as claimed in Claim 1, wherein the amount of the amino resin comprising sterically hindered secondary aliphatic diamine is 12 - 17 parts by weight.

8. The aliphatic polyurea coating as claimed in Claim 1, wherein the amino resin comprising sterically hindered secondary aliphatic diamine is selected from the group consisting of secondary aliphatic diamines based on alicyclic compounds, secondary aliphatic diamines based on branched alicyclic compounds and secondary aliphatic diamines based on linear aliphatic compounds.

9. The aliphatic polyurea coating as claimed in Claim 1, 7 or 8, wherein the amino equivalent of the amino resin comprising sterically hindered secondary aliphatic diamine can be selected from, but not limited to, 200 - 400.

10. A method for preparing an aliphatic polyurea coating, comprising the step of mixing the components including A, B and C:
A) 30 - 50 parts by weight of NCO-terminated polycarbonate diol modified and/or polyether polyol modified isophorone diisocyanate (IPDI) prepolymer;
B) 3 - 15 parts by weight of hexamethylene diisocyanate (HDI) oligomers; and
C) 10 - 25 by weight of amino resin comprising sterically hindered secondary aliphatic diamines.

11. The method as claimed in Claim 10, wherein the amount of the NCO-terminated polycarbonate diol modified and/or polyether polyol modified isophorone diisocyanate (IPDI) prepolymer is 33 - 40 parts by weight.

12. The method as claimed in Claim 10, wherein the amount of the hexamethylene diisocyanate (HDI) oligomers is 4 - 6 parts by weight.

13. The method as claimed in Claim 10 or 12, wherein the hexamethylene diisocyanate (HDI) oligomers is selected from the group consisting of hexamethylene diisocyanate trimer, hexamethylene diisocyanate biuret and hexamethylene diisocyanate uretdion.

14. The method as claimed in Claim 10, wherein the amount of the amino resin comprising sterically hindered secondary aliphatic diamine is 12 - 17 parts by weight.

15. The method as claimed in Claim 10 or 14, wherein the amino resin comprising sterically hindered secondary aliphatic diamine is selected from the group consisting of secondary aliphatic diamines based on alicyclic compounds, secondary aliphatic diamines based on branched alicyclic compounds and secondary aliphatic diamines based on linear aliphatic compounds.

16. An aliphatic polyurea coating layer, wherein the aliphatic polyurea coating layer is produced by applying the aliphatic polyurea coating as claimed in Claim 1, 2, 4, 5, 7, or 8 to a substrate.

## Patentansprüche

1. Beschichtung aus aliphatischem Polyharnstoff, umfassend ein Produkt, erhalten durch Mischen der Komponenten, die A, B und C einschließen:
A) 30-50 Gewichtsteile NCO-terminiertes Polycarbonatdiol-modifiziertes und/oder Polyetherpolyol-modifiziertes Isophorondiisocyanat-(IPDI)-Prepolymer;
B) 3-15 Gewichtsteile Hexamethylendiisocyanat-(HDI)-Oligomere; und
C) 10-25 Gewichtsteile Aminoharz, das sterisch gehinderte sekundäre aliphatische Diamine umfasst.

2. Beschichtung aus aliphatischem Polyharnstoff nach Anspruch 1, wobei die Menge des NCO-terminierten Polycarbonatdiol-modifizierten und/oder Polyetherpolyol-modifizierten Isophorondiisocyanat-Prepolymers 33-40 Gewichtsteile beträgt.

3. Beschichtung aus aliphatischem Polyharnstoff nach Anspruch 1 oder 2, wobei das mittlere Molekulargewicht des NCO-terminierten Polycarbonatdiolmodifizierten und/oder Polyetherpolyol-modifizierten Isophorondiisocyanat(IPDI)-Prepolymers 1500 bis 3500 beträgt und der NCO-Gehalt 2,5-5,0 Gew.-%, bezogen auf 100 Gew.-% des NCO-terminierten Polycarbonatdiol-modifizierten und/oder Polyetherpolyol-modifizierten Isophorondiisocyanat(IPDI)-Prepolymers, beträgt.

4. Beschichtung aus aliphatischem Polyharnstoff nach Anspruch 1, wobei die Menge der Hexamethylendiisocyanat(HDI)-Oligomere 4-6 Gewichtsteile beträgt.

5. Beschichtung aus aliphatischem Polyharnstoff nach Anspruch 1, wobei die Hexamethylendiisocyanat-(HDI)-Oligomere aus der Gruppe bestehend aus Hexamethylendiisocyanat-Trimer, Hexamethylendiisocyanat-Biuret und Hexamethylendiisocyanat-Uretdion ausgewählt sind.

6. Beschichtung aus aliphatischem Polyharnstoff nach Anspruch 1, 4 oder 5, wobei der NCO-Gehalt der Hexamethylendiisocyanat(HDI)-Oligomere 10-25 Gew.-%, bezogen auf 100 Gew.-% der Hexamethylendiisocyanat(HDI)-Oligomere, beträgt.

7. Beschichtung aus aliphatischem Polyharnstoff nach Anspruch 1, wobei die Menge des Aminoharzes, das sterisch gehindertes sekundäres aliphatisches Diamin umfasst, 12-17 Gewichtsteile beträgt.

8. Beschichtung aus aliphatischem Polyharnstoff nach Anspruch 1, wobei das Aminoharz, das sterisch gehindertes sekundäres aliphatisches Diamin umfasst, aus der Gruppe bestehend aus sekundären aliphatischen Diaminen auf Basis von alicyclischen Verbindungen, sekundären aliphatischen Diaminen auf Basis von verzweigten alicyclischen Verbindungen und sekundären aliphatischen Diaminen auf Basis von linearen aliphatischen Verbindungen ausgewählt ist.

9. Beschichtung aus aliphatischem Polyharnstoff nach Anspruch 1, 7 oder 8, wobei das Aminoäquivalent des Aminoharzes, das sterisch gehindertes sekundäres aliphatisches Diamin umfasst, aus 200-400 ausgewählt sein kann, aber nicht darauf beschränkt ist.

10. Verfahren zur Herstellung einer Beschichtung aus aliphatischem Polyharnstoff, umfassend den Schritt des Mischens der Komponenten, die A, B und C einschließen:
A) 30-50 Gewichtsteile NCO-terminiertes Polycarbonatdiol-modifiziertes und/oder Polyetherpolyol-modifiziertes Isophorondiisocyanat-(IPDI)-Prepolymer;
B) 3-15 Gewichtsteile Hexamethylendiisocyanat-(HDI)-Oligomere; und
C) 10-25 Gewichtsteile Aminoharz, das sterisch gehinderte sekundäre aliphatische Diamine umfasst.

11. Verfahren nach Anspruch 10, bei dem die Menge des NCO-terminierten Polycarbonatdiol-modifizierten und/oder Polyetherpolyol-modifizierten Isophorondiisocyanat(IPDI)-Prepolymers 33-40 Gewichtsteile beträgt.

12. Verfahren nach Anspruch 10, bei dem die Menge der Hexamethylendiisocyanat(HDI)-Oligomere 4-6 Gewichtsteile beträgt.

13. Verfahren nach Anspruch 10 oder 12, bei dem die Hexamethylendiisocyanat(HDI)-Oligomere aus der Gruppe bestehend aus Hexamethylendiisocyanat-Trimer, Hexamethylendiisocyanat-Biuret und Hexamethylendiisocyanat-Uretdion ausgewählt werden.

14. Verfahren nach Anspruch 10, bei dem die Menge des Aminoharzes, das sterisch gehindertes sekundäres aliphatisches Diamin umfasst, 12-17 Gewichtsteile beträgt.

15. Verfahren nach Anspruch 10 oder 14, bei dem das Aminoharz, das sterisch gehindertes sekundäres aliphatisches Diamin umfasst, aus der Gruppe bestehend aus sekundären aliphatischen Diaminen auf Basis von alicyclischen Verbindungen, sekundären aliphatischen Diaminen auf Basis von verzweigten alicyclischen Verbindungen und sekundären aliphatischen Diaminen auf Basis von linearen aliphatischen Verbindungen ausgewählt wird.

16. Beschichtungsschicht aus aliphatischem Polyharnstoff, wobei die Beschichtungsschicht aus aliphatischem Polyharnstoff durch Aufbringen der Beschichtung aus aliphatischem Polyharnstoff nach Anspruch 1, 2, 4, 5, 7 oder 8 auf ein Substrat hergestellt wird.

## Revendications

1. Revêtement de polyurée aliphatique, comprenant un produit obtenu en mélangeant des composants incluant A, B et C :
A) 30-50 parties en poids de prépolymère de diisocyanate d'isophorone (IPDI) à terminaisons NCO modifié par polycarbonate-diol et/ou modifié par polyéther-polyol ;
B) 3-15 parties en poids d'oligomères de diisocyanate d'hexaméthylène (HDI) ; et
C) 10-25 parties en poids de diamines aliphatiques secondaires stériquement encombrées comprenant une résine aminique.

2. Revêtement de polyurée aliphatique selon la revendication 1, dans lequel la quantité du prépolymère de diisocyanate d'isophorone à terminaisons NCO modifié par polycarbonate-diol et/ou modifié par polyéther-polyol est de 33-40 parties en poids.

3. Revêtement de polyurée aliphatique selon la revendication 1 ou 2, dans lequel le poids moléculaire moyen du prépolymère de diisocyanate d'isophorone (IPDI) à terminaisons NCO modifié par polycarbonate-diol et/ou modifié par polyéther-polyol est de 1500-3500, et la teneur en NCO est de 2,5-5,0 % en poids, rapporté à 100 % en poids du prépolymère de diisocyanate d'isophorone (IPDI) à terminaisons NCO modifié par polycarbonate-diol et/ou modifié par polyéther-polyol.

4. Revêtement de polyurée aliphatique selon la revendication 1, dans lequel la quantité des oligomères de diisocyanate d'hexaméthylène (HDI) est de 4-6 parties en poids.

5. Revêtement de polyurée aliphatique selon la revendication 1, dans lequel les oligomères de diisocyanate d'hexaméthylène (HDI) sont choisis dans le groupe constitué par le trimère de diisocyanate d'hexaméthylène, le biuret de diisocyanate d'hexaméthylène et l'uretdione de diisocyanate d'hexaméthylène.

6. Revêtement de polyurée aliphatique selon la revendication 1, 4 ou 5, dans lequel la teneur en NCO des oligomères de diisocyanate d'hexaméthylène (HDI) est de 10-25 % en poids, rapporté à 100 % en poids des oligomères de diisocyanate d'hexaméthylène (HDI).

7. Revêtement de polyurée aliphatique selon la revendication 1, dans lequel la quantité de la diamine aliphatique secondaire stériquement encombrée comprenant une résine aminique est de 12-17 parties en poids.

8. Revêtement de polyurée aliphatique selon la revendication 1, dans lequel la diamine aliphatique secondaire stériquement encombrée comprenant une résine aminique est choisie dans le groupe constitué par les diamines aliphatiques secondaires basées sur des composés alicycliques, les diamines aliphatiques secondaires basées sur des composés alicycliques ramifiés et les diamines aliphatiques secondaires basées sur des composés aliphatiques linéaires.

9. Revêtement de polyurée aliphatique selon la revendication 1, 7 ou 8, dans lequel l'équivalent amino de la diamine aliphatique secondaire stériquement encombrée comprenant une résine aminique peut être sélectionné à partir de, mais non limité à, 200-400.

10. Procédé de préparation d'un revêtement de polyurée aliphatique, comprenant l'étape de mélange des composants incluant A, B et C :
A) 30-50 parties en poids de prépolymère de diisocyanate d'isophorone (IPDI) à terminaisons NCO modifié par polycarbonate-diol et/ou modifié par polyéther-polyol ;
B) 3-15 parties en poids d'oligomères de diisocyanate d'hexaméthylène (HDI) ; et
C) 10-25 parties en poids de diamines aliphatiques secondaires stériquement encombrées comprenant une résine aminique.

11. Procédé selon la revendication 10, dans lequel la quantité du prépolymère de diisocyanate d'isophorone (IPDI) à terminaisons NCO modifié par polycarbonate-diol et/ou modifié par polyéther-polyol est de 33-40 parties en poids.

12. Procédé selon la revendication 10, dans lequel la quantité des oligomères de diisocyanate d'hexaméthylène (HDI) est de 4-6 parties en poids.

13. Procédé selon la revendication 10 ou 12, dans lequel les oligomères de diisocyanate d'hexaméthylène (HDI) sont choisis dans le groupe constitué par le trimère de diisocyanate d'hexaméthylène, le biuret de diisocyanate d'hexaméthylène et l'uretdione de diisocyanate d'hexaméthylène.

14. Procédé selon la revendication 10, dans lequel la quantité de la diamine aliphatique secondaire stériquement encombrée comprenant une résine aminique est de 12-17 parties en poids.

15. Procédé selon la revendication 10 ou 14, dans lequel la diamine aliphatique secondaire stériquement encombrée comprenant une résine aminique est choisie dans le groupe constitué par les diamines aliphatiques secondaires basées sur des composés alicycliques, les diamines aliphatiques secondaires basées sur des composés alicycliques ramifiés et les diamines aliphatiques secondaires basées sur des composés aliphatiques linéaires.

16. Couche de revêtement de polyurée aliphatique, la couche de revêtement de polyurée aliphatique étant produite en appliquant le revêtement de polyurée aliphatique selon la revendication 1, 2, 4, 5, 7 ou 8 à un substrat.
